# EUROPÄISCHE PATENTSCHRIFT

(11) **EP 3 298 380 B1**
(45) Veröffentlichungstag und Bekanntmachung des Hinweises auf die Patenterteilung: **21.10.2020**
(21) Anmeldenummer: 16724047.2
(22) Anmeldetag: 20.05.2016
(51) Int. Cl.: G01N 1/28, G02B 21/32

(54) **VERFAHREN UND UNTERSUCHUNGSSYSTEM ZUR UNTERSUCHUNG UND BEARBEITUNG EINER MIKROSKOPISCHEN PROBE**
METHOD AND EXAMINATION SYSTEM FOR EXAMINING AND PROCESSING A MICROSCOPIC SAMPLE
PROCÉDÉ ET SYSTÈME D'EXAMEN ET DE TRAITEMENT D'UN ÉCHANTILLON MICROSCOPIQUE

(30) Priorität: 20.05.2015 DE 102015108017
(43) Veröffentlichungstag der Anmeldung: 28.03.2018
(73) Patentinhaber: Leica Microsystems CMS GmbH, 35578 Wetzlar (DE)
(72) Erfinder: SCHLAUDRAFF, Falk, 35510 Butzbach (DE); WEGNER, Blagovesta, Wetzlar 35578 (DE)
(74) Vertreter: m patent group
(86) Internationale Anmeldenummer: PCT/EP2016/061494
(87) Internationale Veröffentlichungsnummer: WO 2016/185040

(56) Entgegenhaltungen:
- WO-A1-2014/053955
- WO-A1-2015/028401
- US-A1- 2004 085 443
- US-A1- 2004 252 291
- US-A1- 2011 194 749
- US-A1- 2013 278 941
- US-A1- 2013 327 195
- US-A1- 2014 049 818
- US-A1- 2014 098 214

## Beschreibung

Die vorliegende Erfindung betrifft ein Verfahren und ein Untersuchungssystem zur Untersuchung und Bearbeitung einer mikroskopischen Probe gemäß den Oberbegriffen der unabhängigen Patentansprüche.

### Stand der Technik

Verfahren zur Bearbeitung mikroskopischer Proben bzw. Objekte durch die sogenannte Lasermikrodissektion existieren bereits seit Mitte der 1970er Jahre und wurden seitdem kontinuierlich weiterentwickelt.

Bei der Lasermikrodissektion können Zellen, Geweberegionen usw. aus einem Gewebeverband isoliert und als sogenannte Dissektate gewonnen werden. Ein besonderer Vorteil der Lasermikrodissektion ist der kurze Kontakt des Gewebes mit dem Laserstrahl, durch den das Gewebe neben dem Laserstrahl kaum verändert wird. Die spezifische Gewinnung der Dissektate kann dabei auf unterschiedliche Weise erfolgen.

Beispielsweise kann aus einer Probe mittels eines Infrarot- oder Ultraviolettlaserstrahls ein Dissektat isoliert werden, das unter dem Einfluss der Schwerkraft in einen geeigneten Dissektatauffangbehälter fällt. Das Dissektat kann dabei aus der Probe auch zusammen mit einer anhaftenden Membran ausgeschnitten werden.

Ein anderes Verfahren ist die sogenannte Laser Capture Microdissection. Hierbei wird eine thermoplastische Membran, die auch mit einem Reaktionsgefäß verbunden sein kann, mittels eines entsprechenden Laserstrahls erwärmt. Dabei verschmilzt die Membran mit dem gewünschten Bereich des Objekts und kann in einem darauffolgenden Schritt entfernt werden. Eine weitere Alternative besteht darin, das Dissektat mittels des Laserstrahls an einen Deckel eines Dissektatauffangbehälters anzuheften. Auch inverse Mikroskopsysteme zur Lasermikrodissektion sind bekannt.

Bekannte Mikroskopsysteme zur Lasermikrodissektion weisen eine Auflichteinrichtung auf, in deren Strahlengang ein Laserstrahl eingekoppelt wird. Der Laserstrahl wird durch das jeweils verwendete Mikroskopobjektiv auf die Probe fokussiert, die auf einem motorisch-automatisch verfahrbaren Mikroskoptisch aufliegt. Eine Schnittlinie wird beispielsweise dadurch erzeugt, dass der Mikroskoptisch beim Schneiden verfahren wird, um die Probe relativ zu dem feststehenden Laserstrahl zu bewegen. Dies hat jedoch unter anderem den Nachteil, dass die Probe während des Erzeugens der Schnittlinie nicht gut betrachtet werden kann, da sich diese im Gesichtsfeld bewegt.

Vorteilhafter sind daher andere Lasermikrodissektionssysteme, welche Laserscaneinrichtungen aufweisen, die dazu eingerichtet sind, den Laserstrahl bzw. dessen Auftreffpunkt auf der dann feststehenden Probe entsprechend zu verschieben. Derartige Lasermikrodissektionssysteme bieten auch im Rahmen der vorliegenden Erfindung besondere Vorteile. Ein besonders vorteilhaftes Lasermikrodissektionssystem der erläuterten Art, das eine Laserscaneinrichtung mit Keilprismen aufweist, ist in der EP 1 276 586 B1 beschrieben.

In beiden Fällen, also sowohl in Lasermikrodissektionssystemen, in denen der Mikroskoptisch verfahren wird, als auch in Lasermikrodissektionssystemen, die eine Laserscaneinrichtung aufweisen, wird in der Regel mit gepulsten Lasern gearbeitet, wobei durch jeden Laserpuls ein Loch in der Probe erzeugt wird. Eine Schnittlinie entsteht durch eine Aneinanderreihung derartiger Löcher, gegebenenfalls mit Überlappung.

Bei mikroskopischen Untersuchungsverfahren, beispielsweise in der medizinischen Diagnostik, kommen neben Mikroskopen im engeren Sinn häufig vergrößernde digitaloptische Abbildungsvorrichtungen zum Einsatz, insbesondere sogenannte Slidescanner. Slidescanner werden dazu eingesetzt, teilweise oder vollständige Abbilder von Objektträgern mit darauf aufgebrachten mikroskopischen Proben zu erstellen, die anschließend am Bildschirm ausgewertet und/oder gespeichert werden können. Die Auswertung kann auch teilweise oder vollständig automatisch erfolgen, beispielsweise unter Verwendung von Mustererkennungsverfahren, mittels derer beispielsweise krankhaft veränderte Zell- oder Gewebetypen identifiziert werden können. Ein Slidescanner ermöglicht damit eine Untersuchung bzw. Diagnose aufgrund digitaler Abbilder von Proben ohne die direkte Verwendung eines Mikroskops. Slidescanner bieten den Vorteil eines hohen Durchsatzes und ermöglichen eine weitgehend automatische Abarbeitung einer Vielzahl von Proben.

Werden in digitalen Abbildern einer entsprechenden digitaloptischen Abbildungsvorrichtung, beispielsweise eines Slidescanners, Zell- oder Gewebetypen erkannt, die einer zusätzlichen molekularbiologischen und/oder biochemischen Abklärung bedürfen, können entsprechende Bereiche einer mikroskopischen Probe in einem Lasermikrodissektionssystem bearbeitet, d.h. dort aus der Probe ausgeschnitten werden.

Die nachträgliche Bearbeitung von Proben, die zuvor mittels vergrößernder digitaloptischer Abbildungsvorrichtungen untersucht wurden, beispielsweise den erwähnten Slidescannern, durch Lasermikrodissektion erweist sich jedoch herkömmlicherweise als ausgesprochen aufwändig. Insbesondere ist es herkömmlicherweise nicht möglich, anhand eines digitalen Abbilds einer mikroskopischen Probe bestimmte Bereiche vorzugeben und genau dieselben Bereiche desselben Objekts bzw. Objektträgers in einem Lasermikrodissektionssystem zu bearbeiten.

Stand der Technik ist in diesem Zusammenhang vielmehr die Erzeugung von Serienschnitten, wie beispielsweise in der US 2012/0045790 A1 offenbart. Hierbei werden aus einem Gewebeblock zwei benachbarte dünne Gewebeschnitte, beispielsweise mit einem Mikrotom, angefertigt und unterschiedlich behandelt. Der erste Schnitt wird einer Standardbehandlung und anschließenden Erzeugung eines entsprechenden Abbilds unterworfen. Hierbei erfolgt beispielsweise eine Färbung der Probe und eine Digitalisierung in einem Slidescanner. Ein Pathologe nimmt anhand dieses Schnitts eine Auswahl von Probenbereichen vor, die in einem Lasermikrodissektionssystem untersucht werden sollen. Entsprechende Bereichsinformationen werden in einem Laborinformationssystem gespeichert. Dem Lasermikrodissektionssystem wird parallel dazu der zweite Schnitt zugeführt. In dem Lasermikrodissektionssystem wird dieser zweite Schnitt dann auf Grundlage der bezüglich des ersten Schnitts getroffenen Bereichsauswahl bearbeitet. In diesem Zusammenhang können auch vergleichsweise langsam arbeitende und für zuverlässige Ergebnisse nicht ausreichend genaue digitale Bildüberlagerungsprogramme zum Einsatz kommen.

Entsprechende Verfahren weisen insbesondere den Nachteil auf, dass ein entsprechender Gewebebereich auf dem zweiten Schnitt im Lasermikrodissektionssystem nicht genau getroffen wird. Dies ist auch im Rahmen der nachfolgenden Beschreibung näher erläutert.

In der US 2011/194749 A1 ist ein Verfahren beschrieben, bei dem ein Testschnitt einer Probe, beispielsweise einer Gefrierprobe, gewonnen und abgebildet wird. Ein Laser kann eingesetzt werden, um vor der Erzeugung des Testschnitts Ausrichtungsmarkierungen in der Probe zu erzeugen. Auf diese Weise ein kann ein Zielbereich, der einem entsprechenden Bereich in dem Testschnitt entspricht, in dem nicht geschnittenen Probenrest ermittelt werden.

Gemäß der US 2004/252291 A1 können für eine anschließende Lasermikrodissektion Positionen biologischer Objekte in Bezug auf eine oder mehrere Referenzpositionen gespeichert werden. Gemäß der US 2013/278941 A1 können Objektträger unterschiedlich markiert werden. Die WO 2015/028401 Aloffenbart ein Verfahren zur Kalibration eines Lasermikrodissektionssystems.

### Aufgabe der Erfindung

Vor diesem Hintergrund besteht der Bedarf nach verbesserten Untersuchungsmöglichkeiten zur Untersuchung und Bearbeitung mikroskopischer Proben, insbesondere unter Verwendung der erwähnten vergrößernden digitaloptischen Abbildungsvorrichtungen und von Lasermikrodissektionssystemen.

### Offenbarung der Erfindung

Die vorliegende Erfindung schlägt ein Verfahren und ein Untersuchungssystem zur Untersuchung und Bearbeitung einer mikroskopischen Probe mit den Merkmalen der unabhängigen Patentansprüche vor. Ausgestaltungen sind jeweils Gegenstand der abhängigen Patentansprüche sowie der nachfolgenden Beschreibung.

### Vorteile der Erfindung

Die Erfindung geht von einem Verfahren zur Untersuchung einer auf einem Objektträger angeordneten mikroskopischen Probe mit einer vergrößernden digitaloptischen Abbildungsvorrichtung, durch welche die Probe mit optischen Mitteln abgebildet und ein digitales Abbild der Probe erzeugt wird, und zur Bearbeitung der auf dem Objektträger angeordneten mikroskopischen Probe mit einem Lasermikrodissektionssystem, welches eine Mikroskopoptik und eine Lasereinheit aufweist, und mit welchem ein Laserstrahl zur Bearbeitung der Probe erzeugt wird, aus.

Die Erfindung betrifft ein derartiges Verfahren, das folgende Schritte aufweist:
a) Erzeugen von wenigstens zwei Referenzmarkierungen auf dem Objektträger mit dem Laserstrahl des Lasermikrodissektionssystems, die sowohl mittels der digitaloptischen Abbildungsvorrichtung als auch mittels des Lasermikrodissektionssystems identifizierbar sind,
b) Aufbringen der Probe auf denselben Objektträger, vor oder nachdem die Referenzmarkierungen auf dem Objektträger gemäß dem vorgenannten Schritt a) erzeugt werden,
c) Erzeugen des digitalen Abbilds der Probe auf dem Objektträger mit der digitaloptischen Abbildungsvorrichtung, wobei das Abbild auch die Referenzmarkierungen umfasst,
d) Festlegen wenigstens eines Bildbereichs des Abbilds und Erzeugen von ersten Lageinformationsdaten, die die Lage des wenigstens einen Bildbereichs in dem Abbild angeben,
e) Identifizieren der Referenzmarkierungen in dem Abbild und Erzeugen von zweiten Lageinformationsdaten, die die Lage der Referenzmarkierungen in dem Abbild angeben, bevor, während oder nachdem der wenigstens eine Bildbereich des Abbilds gemäß dem vorgenannten Schritt d) festgelegt wird,
f) Bereitstellen der ersten und der zweiten Lageinformationsdaten an das Lasermikrodissektionssystem,
g) Abbilden des Objektträgers mit der Probe und den Referenzmarkierungen und Identifizieren der Referenzmarkierungen mit dem Lasermikrodissektionssystem, sowie Erzeugen von dritten Lageinformationsdaten, die die Lage der Referenzmarkierungen in dem Lasermikrodissektionssystem angeben,
h) Korrelieren der ersten Lageinformationsdaten, der zweiten Lageinformationsdaten und der dritten Lageinformationsdaten und Bearbeiten wenigstens eines Probenbereichs der Probe, der dem wenigstens einen in dem vorgenannten Schritt d) festgelegten wenigstens einen Bildbereich des Abbilds entspricht, mit dem Lasermikrodissektionssystem.

Erfindungsgemäß werden also zunächst wenigstens zwei, mittels der Abbildungsvorrichtung und des Lasermikrodissektionssystems identifizierbare Referenzmarkierungen auf dem Objektträger mit dem Laserstrahl des Lasermikrodissektionssystems erzeugt. Weil die Referenzmarkierungen mit dem Laser des Lasermikrodissektionssystems erzeugt werden, sind keine zusätzlichen Markierungsmittel oder separate Markierungseinrichtungen erforderlich. Im Gegensatz zu bekannten Verfahren werden also im Rahmen der vorliegenden Erfindung nicht oder nicht notwendigerweise Objektträger mit bereits vorhandenen Referenzmarkierungen verwendet, wie sie beispielsweise aus der DE 10 2012 241 664 A1 bekannt sind.

Bevor oder nachdem die Referenzmarkierungen auf dem Objektträger gemäß dem soeben erläuterten Schritt erzeugt werden, wird die Probe auf denselben Objektträger aufgebracht und optional auf dem Objektträger einer geeigneten Behandlung unterzogen. Die Probe kann nach dem Aufbringen auf den Objektträger beispielsweise fixiert, gefärbt oder entwässert werden.

Im Rahmen der vorliegenden Erfindung wird anschließend mittels der separat zu dem Lasermikrodissektionssystem, beispielsweise an einem anderen Ort, bereitgestellten Abbildungsvorrichtung ein digitales Abbild sowohl der Probe als auch der zuvor auf dem Objektträger erzeugten Referenzmarkierungen erzeugt. Der Objektträger wird also mit einer digitaloptischen Abblidungsvorrichtung, beispielsweise mit einem Slidescanner, digitalisiert, wobei ein digitales Abbild erhalten wird, das die Probe selbst (oder wahlweise auch nur einen Teil davon) und die Referenzmarkierungen umfasst.

Erfindungsgemäß ist weiter vorgesehen, wenigstens einen Bildbereich eines solchen Abbilds festzulegen, beispielsweise durch Untersuchung durch einen Pathologen oder mittels eines automatischen Untersuchungsverfahrens, und erste Lageinformationsdaten zu erzeugen, die die Lage des wenigstens einen Bildbereichs in dem Abbild angeben. Dieser Schritt entspricht an sich herkömmlichen Verfahren, bei denen ein Pathologe manuell bestimmte Bereiche, beispielsweise pathogen veränderte Geweberegionen, in einem Probenschnitt bzw. seinem digitalen Abbild markiert, beispielsweise mit einer Markierungslinie umgibt. Die Festlegung entsprechender Bildbereiche kann auch teilweise oder vollständig automatisch erfolgen, wie erwähnt beispielsweise unter Verwendung von Muster- bzw. Gewebeerkennungsverfahren.

Die "Lageinformationsdaten", die die Lage des wenigstens einen Bildbereichs in dem Abbild angeben, sind beispielsweise digitale Daten, die einer entsprechenden Markierungslinie entsprechen, und können in an sich bekannter Weise, beispielsweise unter Verwendung von XML-Dateien, bereitgestellt und gegebenenfalls zwischengespeichert werden. Eine "Lage" des wenigstens einen Bildbereichs in dem Abbild umfasst dabei im Sprachgebrauch dieser Anmeldung die Position in dem Abbild, beispielsweise eines oder mehrerer Punkte, jedoch auch eine geometrische oder irrreguläre Form, die von einem Benutzer oder mittels einer entsprechenden Erkennungsvorschrift in beliebiger Weise vorgegeben werden kann.

Vor, nach oder gleichzeitig zum Festlegen des wenigstens einen Bildbereichs des Abbilds und dem Erzeugen der ersten Lageinformationsdaten erfolgt im Rahmen des erfindungsgemäßen Verfahrens ein Identifizieren der Referenzmarkierungen in dem Abbild und ein Erzeugen von zweiten Lageinformationsdaten, die die Lage der Referenzmarkierungen in dem Abbild angeben. Auch das Identifizieren der Referenzmarkierungen kann manuell erfolgen, beispielsweise indem ein Pathologe die Referenzmarkierungen in einem entsprechenden Abbild mittels einer Maus oder einer anderen digitalen Eingabeeinheit in vorgegebener Weise, beispielsweise mit einem Kreuz, markiert. Alternativ dazu kann jedoch auch in diesem Fall vorgesehen sein, die Referenzmarkierungen in dem Abbild mittels automatischer Erkennungsvorschriften zu identifizieren.

Die Referenzmarkierungen können zu diesem Zweck eine vorbestimmte Form aufweisen, mit der sie zuvor mittels des Lasermikrodissektionssystems erzeugt wurden. Hilfreich kann weiterhin sein die wenigstens zwei Referenzmarkierungen unterschiedlich zu gestalten und zu hinterlegen, welche Form die erste, zweite usw. Referenzmarkierung besitzt. Diese Unterscheidung der Form hilft bei der Identifizierung der Reihenfolge der Referenzmarkierungen. Beispielsweise können diese kreuzförmig oder fadenkreuzartig ausgebildet sein. Die zweiten Lageinformationsdaten können grundsätzlich in der gleichen Weise wie die ersten Lageinformationsdaten, d.h. beispielsweise in Form von XML-Dateien, bereitgestellt und gegebenenfalls zwischengespeichert werden.

Das erfindungsgemäße Verfahren sieht vor, die ersten Lageinformationsdaten und die zweiten Lageinformationsdaten (und ggf. weitere Lageinformationsdaten in entsprechender Reihenfolge) an das Lasermikrodissektionssystem bereitzustellen und den zuvor digitalisierten, d.h. zur Erzeugung des digitalen Abbilds in der Abbildungsvorrichtung verwendeten Objektträger mit der darauf aufgebrachten Probe in das Lasermikrodissektionssystem einzubringen und dort nochmals abzubilden. Es ist dabei selbstverständlich auch möglich, beispielsweise eine Serie von Objektträgern zunächst in der Abbildungsvorrichtung zu digitalisieren und zwischenzulagern. Der oder die Objektträger können dabei unter geeigneten Lagerbedingungen vorgehalten werden. Es ist also im Rahmen des vorliegenden Verfahrens nicht ausdrücklich erforderlich, dass ein Objektträger unmittelbar nach der Erzeugung des digitalen Abbilds bzw. der Diagnose, d.h. dem Festlegen wenigstens eines Bildbereichs des Abbilds bzw. dem Identifizieren der Referenzmarkierungen in der Abbildungsvorrichtung, in das Lasermikrodissektionssystem zu verbringen. Das Einbringen des Objektträgers mit der Probe in das Lasermikrodissektionssystem und das Abbilden dort kann unmittelbar vor einer durchzuführenden Untersuchung erfolgen, so dass die Probe geschont werden kann. Zur Abbildung in dem Lasermikrodissektionssystem dient beispielsweise ein dort vorhandenes digitales oder teilweise digitales Abbildungssystem.

Mittels des Lasermikrodissektionssystems erfolgt nun ein erneutes Identifizieren der Referenzmarkierungen. Auch hierbei kann eine teilweise oder vollständig manuelle oder eine teilweise oder vollständig automatische Vorgehensweise erfolgen. In jedem Fall erfolgt bei oder nach dem Identifizieren der Referenzmarkierungen ein Erzeugen von dritten Lageinformationsdaten, die die Lage der Referenzmarkierungen in dem Lasermikrodissektionssystem angeben. Wiederum können entsprechende Lageinformationsdaten gleich oder unterschiedlich zu den ersten und zweiten Lageinformationsdaten bereitgestellt werden.

Erfindungsgemäß ist es nun möglich, die ersten, zweiten und dritten Lageinformationsdaten miteinander zu korrelieren. So ist es insbesondere möglich, die zweiten und dritten Lageinformationsdaten miteinander in Beziehung zu setzten, so dass auch eine Verschiebung, Verdrehung, Verlagerung usw. eines entsprechenden Objektträgers in einem Lasermikrodissektionssystem kompensiert werden kann. Die zweiten und dritten Lageinformationsdaten beziehen sich, wie erwähnt, jeweils auf die Referenzmarkierungen auf einem entsprechenden Objektträger, sodass eine Lagekorrektur insbesondere bei identischer Vergrößerung einfach und unproblematisch erfolgt. Die Genauigkeit der Positionierung des Objektträgers vor dem Erzeugen des Abbilds in der Abbildungsvorrichtung und vor dem Bearbeiten in dem Lasermikrodissektionssystem kann daher vergleichsweise gering sein. Insbesondere spielt es keine Rolle, ob ein Objektträger gegebenenfalls geringfügig verdreht oder verschoben in die Abbildungsvorrichtung bzw. das Lasermikrodissektionssystem eingebracht wurde. Auch bei unterschiedlichen Vergrößerungen bei der in der Abbildungsvorrichtung und dem Lasermikrodissektionssystem vorgenommenen Abbildung ist in der Regel eine einfache Umrechnung durch Vergrößern oder Verkleinern (Skalieren) von Lageinformationsdaten möglich. Ist eine entsprechende Lagekorrektur erfolgt, verfügt das Lasermikrodissektionssystem durch die vorteilhafterweise entsprechend mitkorrigierten ersten Lageinformationsdaten über eine genaue Kenntnis, wo auf einem entsprechenden Objektträger der Probenbereich der Probe angeordnet ist, der dem aufgrund des Abbilds der Abbildungsvorrichtung festgelegten wenigstens einen Bildbereich des Abbilds der Probe entspricht. Vorteilhafterweise können also im Rahmen der vorliegenden Erfindung die ersten Lageinformationsdaten, die sich auf den Bildbereich zu einem korrespondierenden Probenbereich in der Probe beziehen, beispielsweise durch Korrekturfaktoren, die sich aus Korrelation der zweiten und dritten Lageinformationsdaten ergeben, korrigiert werden.

Auf diese Weise ist es stets möglich, in dem Lasermikrodissektionssystem genau denjenigen Probenbereich zu bearbeiten, beispielsweise mittels eines Lasers auszuschneiden, der zuvor, beispielsweise durch einen Pathologen oder durch eine digitale, bilddatenverarbeitende Software, in dem Abbild als Abbildungsbereich festgelegt wurde.

Die Erfindung beseitigt mehrere Nachteile des Stands der Technik. Herkömmlicherweise müssen, wie unter Bezugnahme auf die US 2012/0045790 A1 beschrieben, Serienschnitte angefertigt werden, was jedoch einen beträchtlichen Mehraufwand (Anfertigung zweier Schnitte, mehrfache Färbung und Verwendung zweier Objektträger) nach sich zieht, der insbesondere in der Routinediagnostik nicht tolerierbar ist. Dies gilt insbesondere in Anbetracht der Tatsache, dass nicht jeder Schnitt in der Diagnose als abklärungsbedürftig erkannt wird. Parallelschnitte, die nicht mittels des Lasermikrodissektionssystems bearbeitet werden müssen, werden damit umsonst erzeugt. Werden Serienschnitte erst gefertigt, wenn die Abklärungsbedürftigkeit festgestellt wurde, erfordert dies eine erneute Bearbeitung einer Probe, was zeitkritisch ist und das Potential für Verwechslungen birgt. Zudem muss die Probe entsprechend gelagert werden.

Ein weiterer Nachteil bei der Verwendung von Serienschnitten ist die Übertragung der Schnittlinien, die zwar auf einem Standardobjektträger vergleichsweise einfach definiert werden können, deren Übertragung auf einen anders oder gar nicht gefärbten, insbesondere nicht mit einem Deckglas bedeckten, Serienschnitt jedoch ausgesprochen schwierig ist. Zwei Schnitte, also entsprechende mikroskopische Proben, sind in der Regel geringfügig unterschiedlich auf dem Objektträger orientiert, ferner kommt es durch den Schnittvorgang und anschließende Bearbeitungsschritte zur Stauchungen des Gewebes sowie zur Erzeugung von Präparationsartefakten. Dies erfordert gemäß dem Stand der Technik daher die Verwendung aufwendiger Bildüberlagerungsverfahren, die wie erwähnt langsam und ggf. fehleranfällig sind. Weiterhin sind insbesondere kleinere Probenbereiche wie Metastasen in Serienschnitten nicht gleich ausgeprägt.

Die vorliegende Erfindung schafft demgegenüber durch die Verwendung der Referenzmarkierungen in der erläuterten Weise eine akkurate, kostengünstige und massentaugliche Lösung für das Scannen von Objektträgern und das anschließende Auswählen bestimmter Proben bzw. Probenbereiche für die Lasermikrodissektion und anschließende biochemische bzw. molekularbiologische Untersuchungsverfahren. Beispielsweise im Gegensatz zur DE 10 2012 214 664 A1, in der vorgeschlagen wird, Objektträger zu verwenden, die bereits mit Markierungen versehen sind, werden, wie erwähnt, im Rahmen der vorliegenden Erfindung diese Markierungen einfach und kostengünstig in dem Lasermikrodissektionssystem selbst erzeugt. Die Erzeugung der Referenzmarkierungen in dem Lasermikrodissektionssystem kann bei einer definierten Vergrößerung erfolgen, wie sie beispielsweise auch bei der anschließenden digitalen Erfassung und Erzeugung des digitalen Abbilds verwendet wird. Ferner kann durch eine spezifische Erzeugung von Referenzmarkierungen auf die Fähigkeiten einer digitalen Abbildungsvorrichtung zur Identifizierung entsprechender Referenzmarkierungen Rücksicht genommen werden. Die Referenzmarkierungen können also mittels des Lasermikrodissektionssystems in beliebiger Weise erzeugt werden, beispielsweise im Hinblick auf eine besonders einfache Auffindbarkeit.

Ein großer Vorteil der vorliegenden Erfindung gegenüber der Verwendung von Objektträgern mit bereits auf diesen aufgebrachten Referenzmarkierungen, wie beispielsweise in der DE 10 2012 214 664 A1, liegt in der universellen Einsetzbarkeit mit beliebigen Glas- oder Membranobjektträgern. Der Kostenvorteil des erfindungsgemäßen Verfahrens ist daher beträchtlich. Im Rahmen der vorliegenden Erfindung können die Referenzmarkierungen mittels des Lasermikrodissektionssystems, wie bereits erwähnt, auf dem Objektträger vor dem Aufbringen der Probe erzeugt werden. Dies kann insbesondere dann von Vorteil sein, wenn die Referenzmarkierungen auf einem Objektträger bzw. auf einem entsprechenden Substrat erzeugt werden, das später von einer nicht mehr durch das Lasermikrodissektionssystem markierbaren Schicht überdeckt wird.

Insbesondere ist es vorteilhaft, wenn die Referenzmarkierungen auf Grundlage von vierten Lageinformationsdaten erzeugt werden, die eine Lage der Referenzmarkierungen auf dem Objektträger vorgeben. Entsprechende vierte Lageinformationsdaten können beispielsweise auch für mehrere Objektträger in identischer Weise verwendet werden, so dass eine identische oder zumindest vergleichbare Markierung mehrerer Objektträger möglich ist. Dies kann beispielsweise die Wiederauffindung entsprechender Referenzmarkierungen auf unterschiedlichen Objektträgern vereinfachen, weil in einem solchen Fall mittels der Abbildungsvorrichtung in bestimmten, vorbekannten Bildbereichen eines entsprechenden Abbilds nach solchen Referenzmarkierungenn gesucht werden kann. Dies gilt in gleicher Weise auch für das Auffinden der Referenzmarkierungen in dem Lasermikrodissektionssystem. Daher ist es vorteilhaft, wenn die Referenzmarkierungen in dem Abbild und/oder dem Lasermikrodissektionssystem unter Verwendung der vierten Lageinformationsdaten identifiziert werden.

Wie erwähnt, kann im Rahmen der vorliegenden Erfindung ein Objektträger verwendet werden, der zumindest teilweise aus Glas bzw. Metall oder Kunststoff gefertigt ist und/oder eine Membran aufweist, wobei die Referenzmarkierungen in dem Glas bzw. Metall oder Kunststoff und/oder der Membran erzeugt werden. Das Erzeugen der Referenzmarkierungen kann dabei auch beispielsweise eine Umstellung von Laserstrahleigenschaften eines entsprechenden Lasermikrodissektionssystems umfassen, wobei beispielsweise zur Bearbeitung von Glas bzw. Metall oder Kunststoff eine besonders hohe Laserleistung vorgegeben wird.

Wie ebenfalls erwähnt, kann das Identifizieren der Referenzmarkierungen jeweils zumindest teilweise mittels automatischer Verfahren erfolgen, es kann jedoch auch manuell durchgeführt werden. Die Durchführung eines automatischen Verfahrens ermöglicht eine besonders reproduzierbare Auffindung entsprechender Referenzmarkierungen ohne die Gefahr einer Fehlinterpretation durch einen Benutzer.

In einem erfindungsgemäßen Verfahren wird vorteilhafterweise auch, wie ebenfalls erwähnt, der wenigstens eine Bildbereich des Abbilds durch manuelles und/oder automatisches Einzeichnen einer durch das Lasermikrodissektionssystem zu verwendenden Schnittlinie, die eine Begrenzungslinie in einem entsprechenden Abbild darstellt, festgelegt. In diesem Zusammenhang können beispielsweise an sich bekannte Verfahren zum Vorgeben und Verarbeiten entsprechender Schnittlinien verwendet werden.

Wie ebenfalls erwähnt, ist es vorteilhaft, wenn die ersten Lageinformationsdaten neben einer reinen geometrischen Lage auch beispielsweise eine geometrische Form des wenigstens einen Bildbereichs des Abbilds umfassen. Diese Form kann auch irregulär sein und in beliebiger Weise vorgegeben werden.

Die vorliegende Erfindung erstreckt sich auch auf ein Untersuchungssystem, das zur Untersuchung und Bearbeitung einer auf einem Objektträger angeordneten mikroskopischen Probe eingerichtet ist, und das eine vergrößernde digitaloptischen Abbildungsvorrichtung, welche mit optischen Mitteln die Probe abbildet und ein digitales Abbild der Probe erzeugt, und mit einem Lasermikrodissektionssystem, welches eine Mikroskopoptik und eine Lasereinheit aufweist, welche einen Laserstrahl zur Bearbeitung der Probe erzeugt.

Das Untersuchungssystem zeichnet sich durch Steuermittel aus, die dazu eingerichtet sind, die digitaloptische Abbildungsvorrichtung und das Lasermikrodissektionssystem zu steuern und ein Verfahren zu steuern und/oder auszuführen und/oder zu bedienen, wie es zuvor erläutert wurde.

Insbesondere umfassen die Steuermittel des Untersuchungssystems eine Software, die auf der vergrößernden digitaloptischen Abbildungsvorrichtung und/oder dem Lasermikrodissektionssystem installiert ist.

Das Untersuchungssystem ist gemäß einer besonders bevorzugten Ausführungsform der Erfindung gemäß Patentanspruch 11 ausgebildet und umfasst vorzugsweise auch eine das eine Datentransfereinrichtung zum Bereitstellen der ersten und zweiten Lageinformationsdaten an das Lasermikrodissektionssystem.

Auch eine Software, die dazu ausgebildet ist, ein zuvor erläutertes Verfahren zu steuern und/oder auszuführen und/oder zu bedienen, ist Gegenstand der vorliegenden Erfindung.

Zur Vermeidung von Missverständnissen sei an dieser Stelle betont, dass das im Rahmen der Erfindung eingesetzte Verfahren bzw. das entsprechende Untersuchungssystem explizit mit Proben verwendet wird, die bereits mikroskopietauglich vorbereitet sind. Hierbei kann es sich beispielsweise um Dünnschnitte handeln, die mittels eines Mikrotoms aus einem größeren Gewebeblock, beispielsweise einem fixierten Organ oder einer Biopsie eines entsprechenden Organs, herausgetrennt werden. Die vorliegende Erfindung dient daher nicht zur Gewinnung von entsprechenden Proben, sondern zu deren Untersuchung und Bearbeitung, insbesondere zur Isolation von bestimmten Probenbereichen hiervon.

Mikrotome werden ausschließlich bei der Vorbereitung von mikroskopischen Proben eingesetzt. Mikrotome können hierzu auch Laser aufweisen. Die mittels eines Mikrotoms erhaltenen Schnitte werden auf einen Objektträger, wie oben erwähnt, aufgebracht, ggf. dort befestigt, angefärbt usw. Erst dann stehen diese für einen Einsatz in dem erfindungsgemäßen Verfahren bzw. einem entsprechenden Untersuchungssystem zur Verfügung. Ein Mikrotom unterscheidet sich in seinem Betrieb unter anderem dadurch fundamental von einem Lasermikrodissektionssystem, dass dort Schnitte mit möglichst homogener Schnittstärke gewonnen werden. Mikrotome sind daher dazu ausgebildet, eine große Anzahl an identischen Schnitten mit parallelen Schnittflächen zu erzeugen, wohingegen Lasermikrodissektionssysteme zum Heraustrennen von Dissektaten nach probenabhängigen Kriterien, beispielsweise nach visuellen Kriterien, eingerichtet sind. Der Fachmann würde daher bei Mikrotomen eingesetzte technische Lösungen nicht auf Verfahren und Untersuchungssysteme, die die Verwendung von Lasermikrodissektionssystemen umfassen, übertragen.

Weitere Vorteile und Ausgestaltungen der Erfindung ergeben sich aus der Beschreibung und der beiliegenden Zeichnung.

### Figurenbeschreibung

Figur 1 veranschaulicht ein Verfahren gemäß einer Ausführungsform der Erfindung in Form eines schematischen Ablaufplans.
Figur 2 veranschaulicht ein Untersuchungssystem gemäß einer Ausführungsform der Erfindung in schematischer Darstellung.
Figur 3 veranschaulicht einen gemäß einer Ausführungsform der Erfindung markierten Objektträger in schematischer Darstellung.

### Ausführliche Beschreibung der Zeichnungen

In den Figuren sind einander entsprechende Elemente mit identischen Bezugszeichen angegeben und werden nicht wiederholt erläutert.

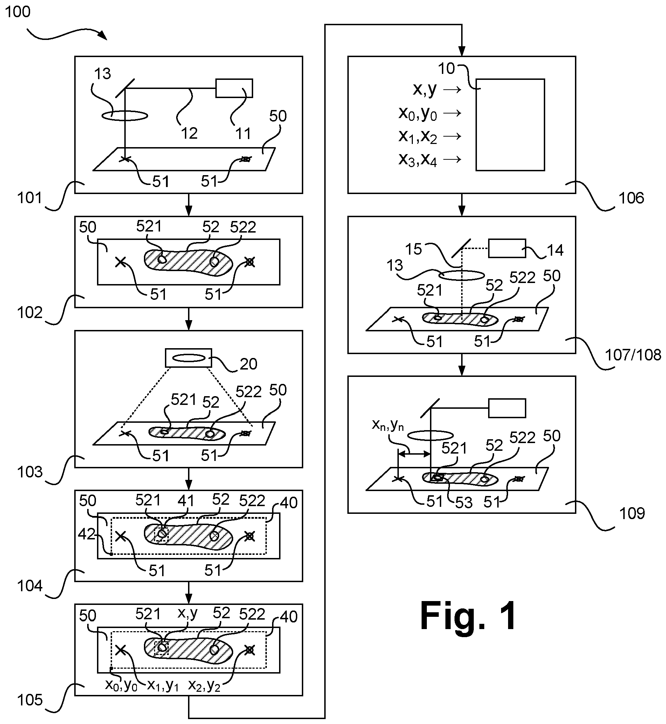

In Figur 1 ist ein Verfahren gemäß einer Ausführungsform der Erfindung in Form eines schematischen Ablaufplans dargestellt und insgesamt mit 100 bezeichnet.

In einem ersten Schritt 101 des Verfahrens 100 erfolgt ein manuelles oder zumindest teilweise automatisches Referenzieren eines Objektträgers 50 mittels eines Lasermikrodissektionssystems, von dem hier in starker Vereinfachung nur eine Lasereinheit 11, die einen Laserstrahl 12 aussendet, und eine durch eine Linse symbolisierte Mikroskopoptik 13 dargestellt ist.

Hierbei werden, wie zuvor ausführlich erläutert, wenigstens zwei Referenzmarkierungen 51 in gleicher oder unterschiedlicher Form auf einem entsprechenden Objektträger 50 angebracht. Dies erfolgt beispielsweise unter Verwendung der zuvor erläuterten ("vierten") Lageinformationsdaten. Entsprechende Daten bezüglich der Referenzmarkierungen 51 können in einer geeigneten Datei in dem Lasermikrodissektionssystem bzw. einer entsprechenden Software gespeichert werden.

In einem nicht dargestellten Schritt, der auch parallel zu oder unabhängig bzw. vor oder nach von dem erfindungsgemäßen Verfahren durchgeführt werden kann, wird ein beispielsweise in Paraffin eingebetteter Gewebeblock oder eine gefrorene Gewebeprobe zur Erzeugung mikroskopischer Proben bearbeitet, beispielsweise in einem Mikrotom geschnitten.

Entsprechende Proben bzw. Schnitte (ein Schnitt wird hier als Probe betrachtet) können auf zuvor in Schritt 101 markierte Objektträger 50 aufgebracht werden oder das Erzeugen der Referenzmarkierungen 51 gemäß Schritt 101 erfolgt anschließend an das Aufbringen der Probe. Der in Figur 1 dargestellte Schritt 102 veranschaulicht dies, wobei hier der Objektträger 50 mit einer entsprechenden Probe 52 und den Referenzmarkierungen 51 gezeigt ist. Die Probe 52 umfasst im dargestellten Beispiel beispielsweise zwei einer eingehenderen Untersuchung zu unterziehende Geweberegionen 521 und 522. In dem Schritt 102 kann auch eine weitere Vorbereitung entsprechender Objektträger 50 mit darauf angebrachten Proben 52 erfolgen. Beispielsweise kann hierbei eine Färbung, Fixierung, Entwässerung und dergleichen erfolgen. Eine entsprechende Probe 52 kann zur Bearbeitung in hierfür spezifisch ausgebildeten Lasermikrodissektionssystemen in dem Schritt 102 auch beispielsweise mittels einer Membran bedeckt werden.

In einem Schritt 103 erfolgt das Erzeugen eines digitalen Abbilds der auf dem Objektträger 50 vorbereiteten Probe 52 und der Referenzmarkierungen 51 unter Verwendung der vergrößernden digitaloptischen Abbildungsvorrichtung 20, beispielsweise unter Verwendung eines Slidescanners.

In einem Schritt 104 erfolgt ein Festlegen wenigstens eines Bildbereichs des Abbilds und das Erzeugen von ersten Lageinformationsdaten, die die Lage des wenigstens einen Bildbereichs in dem Abbild angeben. Der Bildbereich ist hier mit 41, das Abbild mit 40 bezeichnet. Dies kann beispielsweise im Rahmen einer Untersuchung eines entsprechenden Abbilds 40 durch einen Pathologen erfolgen, der hierbei interessierende Bildbereiche 41 eines entsprechenden Abbilds mit einer Begrenzungslinie versieht und/oder durch eine automatische Untersuchung entsprechender digitaler Abbilder. Im dargestellten Beispiel ist der Bildbereich 41 quadratisch veranschaulicht, er kann jedoch auch beliebige andere Formen aufweisen, wie bereits erläutert. Der Bildbereich 41 entspricht im Beispiel einem Probenbereich, in dem sich die Geweberegion 521 befindet. Das digitale Abbild 40 kann auch beispielsweise auf einen Bezugspunkt 42 referenziert werden.

In einem nachfolgenden Schritt 105 erfolgt zugleich ein Identifizieren der Referenzmarkierungen 51, die in dem Schritt 101 auf dem Objektträger erzeugt und in dem Schritt 103 abgebildet wurden, um Bezugspunkte zu den ersten Lageinformationsdaten zu schaffen. Wie erwähnt, ist die Reihenfolge des Identifizierens der Bezugspunkte und anderer Detektionsschritte unerheblich. Auf dieser Grundlage wird in dem Schritt 105 beispielsweise eine geeignete Datei, beispielsweise eine XML-Datei, erzeugt. Im dargestellten Beispiel sind zu Schritt 105 zur Veranschaulichung x,y-Koordinaten gezeigt. Wie erwähnt, können insbesondere bezüglich des Bildbereichs 41 jedoch auch komplexe Formen definiert werden. Für den Bildbereich 41 (vgl. Schritt 104) sind die Koordinaten mit x,y und für die Referenzmarkierungen mit den Koordinaten x₁,y₁ bzw. x₂,y₂ veranschaulicht. Sämtliche Lageinformationen können auf den Bezugspunkt 42 (vgl. Schritt 104) bezogen werden, dessen Koordinaten hier mit x₀,y₀ veranschaulicht sind.

In einem Schritt 106 werden die ersten und zweiten Lageinformationsdaten, beispielsweise über eine entsprechende Datei und/oder eine entsprechende Übertragungseinrichtung, an das Lasermikrodissektionssystem 10 bereitgestellt.

In einem sich hieran anschließenden Schritt 107 erfolgt eine erneute Untersuchung und bildgebende Erfassung des Objektträgers 50 mit der Probe 52 und den Referenzpunkten 51 in dem Lasermikrodissektionssystem 10. Hierzu kommt eine Bilderfassungseinrichtung 14 des Lasermikrodissektionssystems 10 zum Einsatz, wobei ein Abbildungsstrahlengang hier mit 15 veranschaulicht ist. Dieser kann durch dieselbe Mikroskopoptik verlaufen wie der Laserstrahl 12.

In einem Schritt 108, der hier zusammen mit dem Schritt 107 veranschaulicht ist, erfolgt ein Identifizieren der Referenzmarkierungen 51 des Objektträgers 50, die zuvor in demselben oder einem anderen Lasermikrodissektionssystem 10 in dem Schritt 101 erzeugt wurden, so dass erneut ein Bezugssystem zur Bearbeitung einer entsprechenden Probe 52 auf einem Objektträger 50 existiert. Auf dieser Grundlage können dritte Lageinformationsdaten erzeugt werden, die die Lage der Referenzmarkierungen 51 auf dem Objektträger 50, der in das Lasermikrodissektionssystem 50 eingebracht ist, und damit letztlich der Lage der Referenzmarkierungen 51 in dem Lasermikrodissektionssystem 10 selbst, angeben.

In einem Schritt 109 des Verfahrens gemäß der in Figur 1 dargestellten Ausführungsform werden die ersten, zweiten und dritten Lageinformationsdaten wie zuvor erläutert miteinander korreliert und es wird gemäß dem Schritt 109 ferner ein Probenbereich 53 der Probe 52 bearbeitet, der dem wenigstens einen in dem Schritt 106 festgelegten Bildbereich 41 des Abbilds 40 entspricht. Weil dies stets auf Grundlage aufeinander bezogener Daten anhand der Referenzmarkierungen 51 erfolgt, ist eine derartige Bearbeitung besonders zuverlässig.

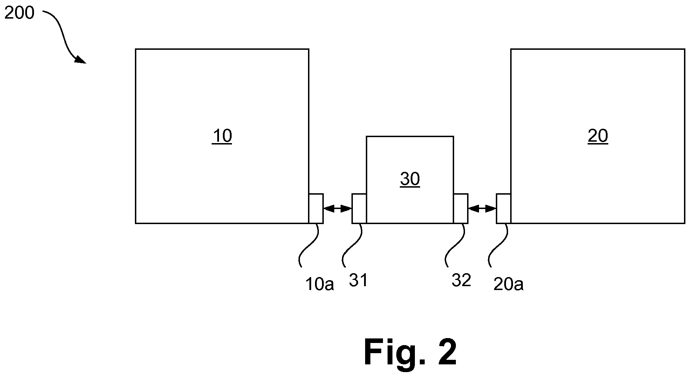

In Figur 2 ist ein Untersuchungssystem gemäß einer Ausführungsform der Erfindung schematisch gezeigt und insgesamt mit 200 bezeichnet. Die einzelnen Elemente eines entsprechenden Untersuchungssystems sind stark vereinfacht gezeigt.

Das Untersuchungssystem 200 umfasst eine vergrößernde digitaloptische Abbildungsvorrichtung 10 und ein Lasermikrodissektionssystem 20. (Die vergrößernde digitaloptische Abbildungsvorrichtung 10 und das Lasermikrodissektionssystem 20 verfügen jeweils über geeignete Software.) Zur Übertragung von Daten zwischen der Abbildungsvorrichtung 10 und dem Lasermikrodissektionssystem 20, nämlich insbesondere der ersten und zweiten Lageinformationsdaten bzw. einer oder mehrerer entsprechender, diese enthaltenden Dateien, ist eine Datenübertragungsvorrichtung 30 vorgesehen. Die Datenübertragungsvorrichtung bzw. Datentransfereinrichtung 30 ist mit geeigneten Schnittstellen 31 und 32 versehen, die eine Anbindung der Abbildungsvorrichtung 10 bzw. des Lasermikrodissektionssystems 20 ermöglichen. Auch die Abbildungsvorrichtung 10 bzw. das Lasermikrodissektionssystem 20 sind zur jeweiligen Anbindung mit geeigneten Schnittstellen 10a bzw. 20a versehen.

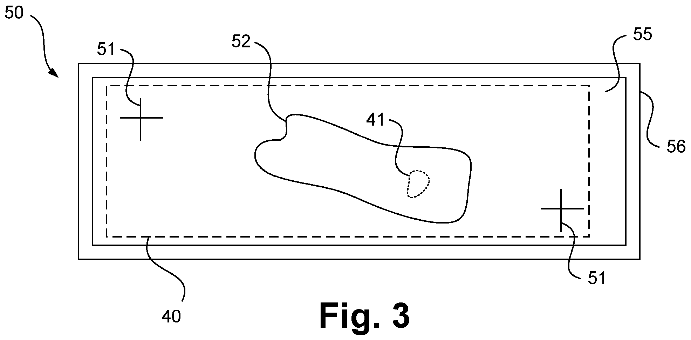

In Figur 3 ist ein im Rahmen der vorliegenden Erfindung eingesetzter, bereits markierter Objektträger schematisch dargestellt und insgesamt mit 50 bezeichnet. Der Objektträger 50 ist nach dem Erzeugen der Referenzmarkierungen, die auch hier mit 51 bezeichnet sind, und nach dem Aufbringen einer Probe 52 auf den Objektträger 50 veranschaulicht. Der Objektträger 50 umfasst im dargestellten Beispiel eine Membran 55, auf der die Probe 52 aufgebracht ist und in der die Referenzmarkierungen 51 erzeugt werden. Die Membran 55 ist in einem geeigneten Rahmen 56 befestigt, beispielsweise einem wiederverwendbaren Stahlrahmen.

In der Figur 3 ist ferner gestrichelt ein digitales Abbild 40 der Probe 52 veranschaulicht, das mittels einer digitaloptischen Abbildungsvorrichtung 10, wie sie in Figur 2 gezeigt ist, erhalten werden kann. Das Erzeugen eines entsprechenden Abbilds 40 kann das Erzeugen eines Abbilds der Probe 52, jedoch auch des gesamten Objektträgers 50, umfassen. In jedem Fall umfasst das erzeugte Abbild 40 jedoch die Referenzmarkierungen 51. Auf einem entsprechenden Abbild kann ein Pathologe wenigstens einen Bildbereich 41 festlegen, beispielsweise einen Bildbereich 41 mit molekularbiologisch und/oder biochemisch zu untersuchen der Eigenschaft. Dieser weist hier im Gegensatz zu dem in Figur 1 veranschaulichten Beispiel eine irreguläre Form auf. Im Rahmen der vorliegenden Erfindung erzeugte Lageinformationsdaten ("erste") Lageinformationsdaten geben die Lage des wenigstens einen Bildbereichs 41 in dem Abbild 40 an. Weitere Lageinformationsdaten ("zweite") Lageinformationsdaten geben die Lage der Referenzmarkierungen 51 in dem Abbild 40 an.

### Bezugszeichenliste

- 10: Lasermikrodissektionssystem
- 11: Lasereinheit
- 12: Laserstrahl
- 13: Mikroskopoptik
- 14: Bilderfassungssystem
- 15: Abbildungsstrahlengang

- 20: Abbildungsvorrichtung

- 30: Datenübertragungsvorrichtung
- 31,32: Schnittstellen
- 10a, 20a: Schnittstellen

- 50: Objektträger
- 51: Referenzmarkierungen
- 52: Probe
- 521,522: Geweberegionen
- 53: Probenbereich
- 55: Membran
- 54: Rahmen für Membran

- 40: digitales Abbild
- 41: Bildbereich
- 42: Bezugspunkt

- 100: Verfahren gemäß der Erfindung
- 101: erster Schritt
- 102: zweiter Schritt
- 103: dritter Schritt
- 104: vierter Schritt
- 105: fünfter Schritt
- 106: sechster Schritt
- 108: achter Schritt
- 109: neunter Schritt

- 200: Untersuchungssystem

## Patentansprüche

1. Verfahren (100) zur Untersuchung einer auf einem Objektträger (50) angeordneten mikroskopischen Probe (52) mit einer vergrößernden digitaloptischen Abbildungsvorrichtung (20), durch welche die Probe (52) mit optischen Mitteln abgebildet und ein digitales Abbild der Probe erzeugt wird, und zur Bearbeitung der auf dem Objektträger (50) angeordneten mikroskopischen Probe (52) mit einem Lasermikrodissektionssystem (10), welches eine Mikroskopoptik (13) und eine Lasereinheit (11) aufweist, und mit welchem ein Laserstrahl (12) zur Bearbeitung der Probe (52) erzeugt wird, mit den folgenden Schritten:
a) Erzeugen (101) von wenigstens zwei Referenzmarkierungen (51) auf dem Objektträger (50) mit dem Laserstrahl (12) des Lasermikrodissektionssystems (10), die sowohl mittels der digitaloptischen Abbildungsvorrichtung (20) als auch mittels des Lasermikrodissektionssystems (10) identifizierbar sind,
b) Aufbringen (102) der Probe (52) auf denselben Objektträger (50), vor oder nachdem die Referenzmarkierungen (51) auf dem Objektträger (50) gemäß dem vorgenannten Schritt a) erzeugt werden,
c) Erzeugen (103) eines digitalen Abbilds (40) der Probe (52) auf dem Objektträger (50) mit der digitaloptischen Abbildungsvorrichtung (20), wobei das Abbild (40) auch die Referenzmarkierungen (51) umfasst,
d) Festlegen (104) wenigstens eines Bildbereichs (41) des Abbilds (40) und Erzeugen von ersten Lageinformationsdaten, die die Lage des wenigstens einen Bildbereichs (41) in dem Abbild (40) angeben,
e) Identifizieren (105) der Referenzmarkierungen (51) in dem Abbild (40) und Erzeugen von zweiten Lageinformationsdaten, die die Lage der Referenzmarkierungen (51) in dem Abbild (40) angeben, bevor, während oder nachdem der wenigstens eine Bildbereich (41) des Abbilds (40) gemäß dem vorgenannten Schritt d) festgelegt wird,
f) Bereitstellen (106) der ersten und der zweiten Lageinformationsdaten an das Lasermikrodissektionssystem (10),
g) Abbilden (107) des Objektträgers (50) mit der Probe (52) und den Referenzmarkierungen (51) und Identifizieren (108) der Referenzmarkierungen (51) mit dem Lasermikrodissektionssystem (10), sowie Erzeugen von dritten Lageinformationsdaten, die die Lage der Referenzmarkierungen (51) in dem Lasermikrodissektionssystem (10) angeben, und
h) Korrelieren der ersten Lageinformationsdaten, der zweiten Lageinformationsdaten und der dritten Lageinformationsdaten und Bearbeiten (109) wenigstens eines Probenbereichs (53) der Probe (52), der dem wenigstens einen in dem vorgenannten Schritt d) festgelegten Bildbereich (41) des Abbilds (40) entspricht, mit dem Lasermikrodissektionssystem (10).

2. Verfahren (100) nach Anspruch 1, bei dem die wenigstens zwei Referenzmarkierungen (51) gemäß Schritt a) mittels des Lasermikrodissektionssystems (10) auf Grundlage von vierten Lageinformationsdaten erzeugt werden, die eine Lage der Referenzmarkierungen auf dem Objektträger (50) vorgeben.

3. Verfahren (100) nach Anspruch 2, bei dem die Referenzmarkierungen (51) in dem Abbild (40) und/oder dem Lasermikrodissektionssystem (10) unter Verwendung der vierten Lageinformationsdaten identifiziert werden.

4. Verfahren (100) nach Anspruch 1, bei dem mit den optischen Mitteln der digitaloptischen Abbildungsvorrichtung (20) die Probe vergrößert abgebildet wird.

5. Verfahren (100) nach einem der vorstehenden Ansprüche, bei dem ein Objektträger (50) verwendet wird, der zumindest teilweise aus Glas, Metall oder Kunststoff gefertigt ist und/oder eine Membran (55) aufweist, und bei dem die Referenzmarkierungen (51) in dem Glas, Metall, Kunststoff und/oder der Membran erzeugt werden.

6. Verfahren (100) nach einem der vorstehenden Ansprüche, bei dem das Identifizieren der Referenzmarkierungen (51) gemäß Schritt e) und/oder gemäß Schritt g) zumindest teilweise mittels eines manuellen und/oder automatisierten Verfahrens durchgeführt wird.

7. Verfahren (100) nach einem der vorstehenden Ansprüche, bei dem der wenigstens eine Bildbereich (41) des Abbilds (40) gemäß Schritt d) durch manuelles und/oder automatisches Einzeichnen einer durch das Lasermikrodissektionssystem (10) zu verwendenden Schnittlinie festgelegt wird.

8. Verfahren (100) nach einem der vorstehenden Ansprüche, bei dem die ersten Lageinformationsdaten ferner eine Form und/oder Fläche des wenigstens einen Bildbereichs (41) des Abbilds (40) beschreiben.

9. Untersuchungssystem (200), das zur Untersuchung und Bearbeitung einer auf einem Objektträger (50) angeordneten mikroskopischen Probe (52) eingerichtet ist, mit
- einer vergrößernden digitaloptischen Abbildungsvorrichtung (20), welche mit optischen Mitteln die auf dem Objektträger (50) angeordnete Probe (52) abbildet und ein digitales Abbild (40) der Probe (52) erzeugt, und
- einem Lasermikrodissektionssystem (10), welches eine Mikroskopoptik (13) und eine Lasereinheit (11) aufweist, welche einen Laserstrahl zur Bearbeitung der Probe (52) erzeugt,
**gekennzeichnet durch** Steuermittel, die dazu eingerichtet sind, die digitaloptische Abbildungsvorrichtung (20) und das Lasermikrodissektionssystem (10) zu steuern
und ein Verfahren (100) nach einem der Ansprüche 1 bis 8 zu steuern
und/oder auszuführen und/oder zu bedienen.

10. Untersuchungssystem (200) nach Anspruch 9, bei dem die Steuermittel eine Software umfassen, die auf der vergrößernden digitaloptischen Abbildungsvorrichtung (20) und/oder dem Lasermikrodissektionssystem (10) installiert ist.

11. Untersuchungssystem (200) nach Anspruch 9 oder 10, **dadurch gekennzeichnet,**
a) **dass** das Lasermikrodissektionssystem (10) dazu eingerichtet ist, mit dem Laserstrahl (12) wenigstens zwei Referenzmarkierungen (51) auf dem Objektträger (50) zu erzeugen, die sowohl mittels der digitaloptischen Abbildungsvorrichtung (20) als auch mittels des Lasermikrodissektionssystems (10) identifizierbar sind,
b) wobei die Probe (52) auf demselben Objektträger (50) aufgebracht ist und wobei das Aufbringen vor oder nach dem Erzeugen der Referenzmarkierungen (51) gemäß dem vorgenannten Schritt a) auf dem Objektträger (50) erfolgen kann,
c) **dass** die digitaloptische Abbildungsvorrichtung (20) dazu eingerichtet ist,
ein digitales Abbild (40) der Probe (52) auf dem Objektträger (50) zu erzeugen, wobei das Abbild (40) auch die Referenzmarkierungen (51) umfasst,
d) **dass** die digitaloptische Abbildungsvorrichtung (20) dazu eingerichtet ist,
wenigstens einen Bildbereich (41) des Abbilds (40) und erste Lageinformationsdaten, die die Lage des wenigstens einen Bildbereichs (41) in dem Abbild (40) angeben, zu erzeugen,
e) **dass** die digitaloptische Abbildungsvorrichtung (20) weiterhin dazu eingerichtet ist, die Referenzmarkierungen (51) in dem Abbild (40) zu identifizieren und zweite Lageinformationsdaten, die die Lage der Referenzmarkierungen (51) in dem Abbild (40) angeben, zu erzeugen, wobei dies bevor, während oder nach der Festlegung des wenigstens einen Bildbereichs (41) gemäß dem vorgenannten Schritt d) erfolgen kann,
f) **dass** das Untersuchungssystem (200) dazu eingerichtet ist, die ersten und zweiten Lageinformationsdaten an das Lasermikrodissektionssystem (10) bereitzustellen,
g) **dass** Lasermikrodissektionssystem (10) dazu eingerichtet ist, den Objektträger (50) mit der Probe (52) und den Referenzmarkierungen (51) abzubilden und die Referenzmarkierungen (51) zu identifizieren sowie dritte Lageinformationsdaten zu erzeugen, die die Lage der Referenzmarkierungen (51) in dem Lasermikrodissektionssystem (10) angeben, und
h) **dass** das Lasermikrodissektionssystem (10) dazu eingerichtet ist, die ersten Lageinformationsdaten, die zweiten Lageinformationsdaten und die dritten Lageinformationsdaten zu korrelieren und wenigstens einen Probenbereich der Probe (52), der dem wenigstens einen in dem Schritt d) festgelegten wenigstens einen Bildbereich (41) des Abbilds (40) entspricht, zu bearbeiten.

12. Untersuchungssystem (200) nach einem der Ansprüche 9 bis 11, das eine Datentransfereinrichtung (30) zum Bereitstellen der ersten und zweiten Lageinformationsdaten an das Lasermikrodissektionssystem (10) umfasst.

13. Software, die dazu ausgebildet ist, ein Verfahren (100) nach einem der Ansprüche 1 bis 8 zu steuern und/oder auszuführen und/oder zu bedienen.

## Claims

1. A method (100) for examining a microscopic sample (52) arranged on a sample carrier (50) with a magnifying digital-optical imaging device (20) by which the sample (52) is imaged by optical means and a digital image of the sample is generated, and for treating the microscopic sample (52) arranged on the sample carrier (50) with a laser microdissection system (10) which comprises microscope optics (13) and a laser unit (11) and with which a laser beam (12) is generated for treating the sample (52), comprising the following steps:
a) generating (101) at least two reference markings (51) on the sample carrier (50) with the laser beam (12) of the laser microdissection system (10) which can be identified both by means of the digital-optical imaging device (20) and by means of the laser microdissection system (10),
b) arranging (102) the sample (52) on the same sample carrier (50) before or after the reference markings (51) are created on the sample carrier (50) according to the above step a),
c) producing (103) a digital image (40) of the sample (52) on the sample carrier (50) with the digital-optical imaging device (20), wherein the image (40) also comprises the reference markings (51),
d) setting (104) at least one image region (41) of the image (40) and generating first position information data indicating the position of the at least one image region (41) in the image (40),
e) identifying (105) the reference markings (51) in the image (40) and generating second position information data indicating the position of the reference markings (51) in the image (40) before, during or after the at least one image region (41) of the image (40) is determined in accordance with the aforementioned step d),
f) providing (106) the first and second position information data to the laser microdissection system (10),
g) imaging (107) the sample carrier (50) with the specimen (52) and the reference markings (51) and identifying (108) the reference markings (51) with the laser microdissection system (10), and generating third position information data indicating the position of the reference markings (51) in the laser microdissection system (10), and
h) correlating the first position information data, the second position information data and the third position information data, and processing (109) at least one sample region (53) of the sample (52) corresponding to the at least one image region (41) of the image (40) defined in the aforementioned step d) with the laser microdissection system (10).

2. The method (100) according to claim 1, wherein the at least two reference markings (51) according to step a) are generated by means of the laser microdissection system (10) on the basis of fourth position information data which specify a position of the reference markings on the sample carrier (50).

3. The method (100) according to claim 2, wherein the reference markings (51) in the image (40) and/or the laser microdissection system (10) are identified using the fourth position information data.

4. The method (100) according to claim 1, wherein the sample is imaged in magnified form with the optical means of the digital-optical imaging device (20).

5. The method (100) according to one of the preceding claims, wherein a sample carrier (50) is used which is at least partially made of glass, metal or plastic and/or has a membrane (55), and in which the reference marks (51) are produced in the glass, metal, plastic and/or the membrane.

6. The method (100) according to any of the preceding claims, wherein the identification of the reference markings (51) according to step e) and/or according to step g) is carried out at least partially by means of a manual and/or automated method.

7. The method (100) according to any of the preceding claims, wherein the at least one image region (41) of the image (40) is determined according to step d) by manually and/or automatically drawing a cut line to be used by the laser microdissection system (10).

8. A method (100) according to any of the preceding claims, wherein the first position information data further describes a shape and/or region of at least one image region (41) of the image (40).

9. An examination system (200) adapted to examine and treat a microscopic sample (52) arranged on a sample carrier (50), comprising
- a magnifying digital-optical imaging device (20), which by optical means images the sample (52) arranged on the object carrier (50) and generates a digital image (40) of the sample (52), and
- a laser microdissection system (10) comprising microscope optics (13) and a laser unit (11) which generates a laser beam for processing the sample (52),
**characterised by** control means adapted to control the digital-optical imaging device (20) and the laser microdissection system (10) and to control and/or execute and/or operate a method (100) according to any one of claims 1 to 9.

10. The examination system (200) according to claim 9, in which the control means comprise software installed on the magnifying digital-optical imaging device (20) and/or the laser microdissection system (10).

11. The examination system (200) according to claim 9 or 10, **characterized in**
a) **that** the laser microdissection system (10) is adapted to generate with the laser beam (12) at least two reference markings (51) on the sample carrier (50) which are identifiable both by means of the digital-optical imaging device (20) and by means of the laser microdissection system (10),
b) wherein the specimen (52) is arranged on the same sample carrier (50) and wherein the arrangement can take place before or after the generation of the reference markings (51) according to the above-mentioned step a) on the sample carrier (50),
c) **that** the digital-optical imaging device (20) is adapted to produce a digital image (40) of the sample (52) on the sample carrier (50), the image (40) also including the reference markings (51),
d) **that** the digital-optical imaging device (20) is adapted to generate at least one image region (41) of the image (40) and first position information data indicating the position of the at least one image region (41) in the image (40),
e) **that** the digital-optical imaging device (20) is further adapted to identify the reference markings (51) in the image (40) and to generate second position information data indicating the position of the reference markings (51) in the image (40), which can be done before, during or after the setting of the at least one image region (41) according to the aforementioned step d),
f) **that** the examination system (200) is adapted to provide the first and second position information data to the laser microdissection system (10),
g) **that** the laser microdissection system (10) is adapted to image the sample carrier (50) with the sample (52) and the reference markings (51) and to identify the reference markings (51) and to generate third position information data indicating the position of the reference markings (51) in the laser microdissection system (10), and
h) **that** the laser microdissection system (10) is adapted to correlate the first position information data, the second position information data and the third position information data and to treat at least one sample region of the sample (52) corresponding to the at least one image region (41) of the image (40) set in step d).

12. The examination system (200) according to any one of claims 9 to 11, comprising data transfer means (30) for providing the first and second position information data to the laser microdissection system (10).

13. Software adapted to control and/or execute and/or operate a process (100) according to any one of claims 1 to 8.

## Revendications

1. Procédé (100) pour examiner un échantillon microscopique (52) arrangé sur une porte-échantillon (50) avec un dispositif d'imagerie numérique-optique grossissant (20) par lequel l'échantillon (52) est imagé par des moyens optiques et une image numérique de l'échantillon est générée, et pour traiter l'échantillon microscopique (52) disposé sur la porte-échantillon (50) avec un système de microdissection laser (10) qui comporte une optique de microscope (13) et une unité laser (11) et avec lequel un faisceau laser (12) est généré pour traiter l'échantillon (52), comprenant les étapes suivantes :
a) générer (101) d'au moins deux marques de référence (51) sur la porte-échantillon (50) avec le faisceau laser (12) du système de microdissection laser (10), qui peuvent être identifiées à la fois au moyen de dispositif d'imagerie numérique-optique (20) et au moyen du système de microdissection laser (10),
b) arranger (102) le spécimen (52) sur la même porte-échantillon (50) avant ou après la génération des marques de référence (51) sur la porte-échantillon (50) selon l'étape a) ci-dessus,
c) produire (103) une image numérique (40) de l'échantillon (52) sur la porte-échantillon (50) avec le dispositif d'imagerie numerique-optique (20), l'image (40) comprenant également les marques de référence (51),
d) définir (104) au moins une région d'image (41) de l'image (40) et générer premières données d'information de position indiquant la position de la au moins une région d'image (41) dans l'image (40),
e) identifier (105) des marques de référence (51) dans l'image (40) et générer deuxièmes données d'information de position indiquant la position les marques de référence (51) dans l'image (40) avant, pendant ou après la détermination d'au moins une région d'image (41) de l'image (40) conformément à l'étape d) susmentionnée,
f) fournir (106) les premières et les deuxièmes données d'information position au système de microdissection laser (10),
g) imager (107) la porte-échantillon (50) avec l'échantillon (52) et les marques de référence (51) et identifier (108) des marques de référence (51) avec le système de microdissection laser (10), et generer troisièmes données de position indiquant la position des marques de référence (51) dans le système de microdissection laser (10), et
h) corréler les premières données d'information de position, les deuxièmes données d'information de position et les troisièmes données d'information de position, et traiter (109) au moins une région de l'échantillon (53) de l'échantillon (52) correspondant à la au moins une région d'image (41) de l'image (40) définie dans l'étape d) susmentionnée avec le système de microdissection laser (10).

2. Procédé (100) selon la revendication 1, dans lequel les au moins deux marques de référence (51) selon l'étape a) sont générées au moyen du système de microdissection laser (10) sur la base de quatrièmes données d'information de position indiquant une position des marques de référence sur la porte-échantillon (50).

3. Procédé (100) selon la revendication 2, dans lequel les marques de référence (51) dans l'image (40) et/ou le système de microdissection laser (10) sont identifiés en utilisant les quatrièmes données d'information de position.

4. Procédé (100) selon la revendication 1, dans lequel l'échantillon est imagé sous forme agrandie avec les moyens optiques du dispositif d'imagerie numérique-optique (20).

5. Procédé (100) selon l'une des revendications ci-dessus, dans lequel une porte-échantillon (50) est utilisé qui est au moins partiellement en verre, en métal ou en plastique et/ou qui comporte une membrane (55), et dans lequel les marques de référence (51) sont produites dans le verre, le métal, le plastique et/ou la membrane.

6. Procédé (100) selon l'une des revendications ci-dessus, dans lequel l'identification des marques de référence (51) selon l'étape e) et/ou selon l'étape g) est effectuée au moins partiellement au moyen d'une procédé manuelle et/ou automatisée.

7. Procédé (100) selon l'une des revendications précédentes, dans lequel la au moins une région d'image (41) de l'image (40) selon l'étape d) est définée en traçant manuellement et/ou automatiquement une ligne de coupe à utiliser par le système de microdissection laser (10).

8. Procédé (100) selon l'une des revendications précédentes, dans lequel les premières données d'information de position décrivent en outre une forme et/ou une region d'au moins une région d'image (41) de l'image (40).

9. Système d'examen (200) adapté pour examiner et traiter un échantillon microscopique (52) arrangé sur une porte-échantillon (50), comprenant
- un dispositif d'imagerie numérique-optique grossissant (20), qui utilise des moyens optiques pour imager l'échantillon (52) disposé sur le porte-échantillon (50) et génère une image numérique (40) de l'échantillon (52), et
- un système de microdissection laser (10) comprenant une optique de microscope (13) et une unité laser (11) qui génère un faisceau laser pour le traitement de l'échantillon (52)
**caractérisé par** des moyens de contrôle adaptés pour contrôler le dispositif d'imagerie numérique-optique (20) et le système de microdissection laser (10) et pour contrôler et/ou exécuter et/ou faire fonctionner une procédé (100) selon l'une des revendications 1 à 9.

10. Système d'examen (200) selon la revendication 9, dans lequel les moyens de contrôle comprennent un logiciel installé sur le dispositif d'imagerie numérique-optique grossissant (20) et/ou le système de microdissection laser (10).

11. Système d'examen (200) selon la revendication 9 ou 10, **caractérisé en ce**
a) **que** le système de microdissection laser (10) est adapté pour générer avec le faisceau laser (12) au moins deux marques de référence (51) sur la porte-échantillon (50) qui sont identifiables à la fois au moyen du dispositif d'imagerie optique numérique (20) et au moyen du système de microdissection laser (10),
b) dans lequel l'échantillon (52) est arrangé sur la même porte-échantillon (50) et dans lequel l'arrangement peut avoir lieu avant ou après la génération des marques de référence (51) selon l'étape a) susmentionnée sur la lame (50),
c) **que** le dispositif d'imagerie optique numérique (20) est adapté pour produire une image numérique (40) de l'échantillon (52) sur la porte-échantillon (50), l'image (40) comprenant également les marques de référence (51),
d) **que** le dispositif d'imagerie optique numérique (20) est adapté pour generer au moins une region d'image (41) de l'image (40) et des données d'information de première position indiquant la position de la au moins une zone d'image (41) dans l'image (40),
e) **que** le dispositif d'imagerie optique numérique (20) est en outre adapté pour identifier les marques de référence (51) dans l'image (40) et pour générer des deuxièmes données d'information de position indiquant la position des marques de référence (51) dans l'image (40), ce qui peut être fait avant, pendant ou après la détermination de la au moins une zone d'image (41) selon l'étape d) susmentionnée,
f) **que** le système d'examen (200) est adapté pour fournir les premières et deuxièmes données d'information de position au système de microdissection laser (10),
g) **que** le système de microdissection laser (10) est adapté pour imager la porte-échantillon (50) avec l'échantillon (52) et les marques de référence (51) et pour identifier marques de référence (51) et pour générer des troisièmes données d'information de position indiquant la position des marques de référence (51) dans le système de microdissection laser (10), et
h) **que** le système de microdissection laser (10) est adapté pour corréler les premières données d'information de position, les deuxièmes données d'information de position et les troisièmes données d'information de position et pour traiter au moins une zone de l'échantillon (52) correspondant à la au moins une region d'image (41) de l'image (40) définie dans l'étape d).

12. Système d'examen (200) selon l'une quelconque des revendications 9 à 11, comprenant des moyens de transfert de données (30) pour fournir les premières et deuxièmes données d'information de position au système de microdissection laser (10).

13. Logiciel adapté pour contrôler et/ou exécuter et/ou faire fonctionner un procédé (100) selon l'une des revendications 1 à 8.
